# EUROPEAN PATENT APPLICATION

(11) **EP 2 330 543 A1**
(43) Date of publication of application: **08.06.2011**
(21) Application number: 09177858.9
(22) Date of filing: 03.12.2009
(51) Int. Cl.: G06N 99/00, G21K 1/00, G01N 23/00

(54) **Method and device for performing quantum control on infinitesimal quanta**

(71) Applicant: Lam Gow-Lin, 10500 Penang (MY)
(72) Inventor: Lam Gow-Lin, 10500 Penang (MY)
(74) Representative: Viering, Jentschura & Partner

(57) **Abstract**

A method for performing quantum control on infinitesimal quanta includes: an independent reaction space provision step, wherein at least one three-dimensional closed space is provided; an infinitesimal-quantum kinetic energy enhancement step, wherein differently shaped reaction elements are provided on at least one inner surface of each closed space, each reaction element having at least two slits and plural pores; and a parameter control step, wherein at least a first reaction parameter is provided, and, upon occurrence thereof, wave control is performed on a corresponding one of the at least one closed space. The method provides an executable quantum control mechanism which is meaningful in terms of reaction and capable of modifying the properties of matter in a purely physical manner, such that a wavefunction is controlled to provide different energies, thereby providing assistance to environmental improvement techniques, agricultural techniques, and traditional medical techniques.

## Description

### BACKGROUND OF THE INVENTION

### 1. Technical Field

The present invention relates to a method and device for performing quantum control on infinitesimal quanta, wherein the traditional quantum theory is integrated with an experiment structure, and wherein control elements work in conjunction with time parameters and space so as to enable infinitesimal quanta to react. The method and device disclosed herein are applicable to various matters and capable of modifying the physical properties thereof, thereby expanding the application of quantum mechanics to daily life.

### 2. Description of Related Art

As the smallest unit of matter, quanta exhibit wave-particle duality and produce such phenomena as interference, refraction, and superposition in a double-slit experiment. Quanta are omnipresent; they not only diffuse in space but also are the fundamental composition of all matters. In the study of quantum motion, the phenomenon of quantum motion itself can be verified only with an experiment structure designed according to variation of infinitesimal quanta. Furthermore, the world of matter defined in terms of electromagnetic waves can be understood and characterized only by way of quantum mechanics, though to a limited extent. Theoretically, from the perspective of quantum mechanics and in the atom level of matter, when the pattern or energy level of an orbital electron cloud changes, the physical properties of the matter changes accordingly. Hence, there is a trend in material science and applied science to explore and control ever smaller scales so as to provide an infinitesimal-quantum control technique based on quantum physics.

However, due to the following limitations, existing theories and experiment structures of quantum mechanics are still incapable of providing practical quantum control over infinitesimal quanta:
1. Limitation of energy sources: It is well known that the natural space and all matters are composed of waves and particles, wherein the types, generation methods, and control mechanisms of the waves and particles are infinite. Nevertheless, knowledge of corresponding reactions between the waves and particles is lacking, so these reactions cannot be effectively used as a basis of infinitesimal-quantum reaction.
2. Uncertainty of quantum motion: According to Heisenberg's uncertainty principle, it is impossible to make equally accurate observations of position and momentum, as briefly explained below. While the lightest photon has zero rest mass, the electron is also very small. In order to "see" clearly, the wavelength λ of the photon must be slightly smaller than the object to be seen. Given p=h/λ (where p represents momentum of photon, h represents the Planck constant, and λ represents wavelength of photon), the smaller the wavelength λ is, the greater the momentum p of the photon will be. When "observation" takes place, i.e., when light "sees" an electron, or more correctly speaking, when a photon hits the electron, if the photon is a high momentum particle, then the electron hit by the photon immediately acquires a high momentum whose magnitude and direction are unpredictable. As a result, there must be an error in the magnitude of the observed momentum of the electron. To prevent the electron from straying when being "observed", the photon must have low momentum and, consequently, a very long wavelength. Under such circumstances, the position of the electron can only be vaguely seen. Thus, position and momentum cannot be observed with equal accuracy.
3. Confinement to pure academic research: As infinitesimal quanta are present in very small quantity but unlimited combinations, it is extremely difficult to calculate and control infinitesimal quanta. Apart from that, diffusion of particles and waves in space interferes with infinitesimal quanta and renders the moving paths of infinitesimal quanta so elusive that the moving paths defy systematic categorization, repetition, or even explanation. For the above reasons, infinitesimal quanta have not found effective applications. Nowadays, scientists can only build large accelerators to exclude environmental interference and conduct pure academic studies on infinitesimal quanta.

### BRIEF SUMMARY OF THE INVENTION

It is an objective of the present invention to provide a method and device based on the concept of wavefunction and configured for performing quantum control on infinitesimal quanta. By enabling infinitesimal quanta in space to undergo effective reaction, the method is freed from the limitation of energy sources, overpasses the innumerable combinations of control factors, and prevents the interference of waves and particles in natural space. Thus, the method provides an executable quantum control mechanism which is meaningful in terms of reaction and capable of modifying the properties of matter in a purely physical manner, such that a wavefunction is controlled to provide different energies, thereby aiding in environmental improvement techniques, agricultural cultivation and planting techniques, and traditional medical techniques.

It is another objective of the present invention to provide a method for performing quantum control on infinitesimal quanta, wherein the method is not limited in the choices of energy sources but is intended to capture the waves and particles diffused in space, thereby challenging the traditional theory that the types of waves and particles must be specified in advance. This is because, if the waves and particles are specified, the matching between expected results and the corresponding matters will be as difficult and fruitless as finding a needle in a haystack. Moreover, if the waves and particles are limited to those which are artificially supplied and have high energy or high frequency, there will be safety, cost, popularity, and applicability issues to be considered, and in consequence the use value is limited by the limitation on energy sources.

The method for performing quantum control on infinitesimal quanta according to the present invention is also intended to follow the uncertainty principle and dispense with measuring particle movement. In the present invention, the reaction process and results are more important than "certainty in measurement". Therefore, the temporal and spatial components of a wavefunction according to the present invention are limited, regulated, and standardized as control parameters. By so doing, the traditional theory that a motion must be understood before being controlled is dismissed, and thus feasible development of quantum control in no longer hindered by uncertainty in measurement.

The method for performing quantum control on infinitesimal quanta according to the present invention is further intended to be based on practical value and take into account the practical requirements for quantum control in natural environment, so as not to exclude any waves and particles diffused in space. The method of the present invention is also intended to be based on infinitesimal-quantum control of the experiment structures of classical quantum mechanics, such that the focus of research is placed not on particle intensity but on waves, thereby eliminating the blind spot of the traditional theory that quantum motion must be generated by high energy. Thus, the present invention creates an executable quantum control mechanism which is meaningful in terms of reaction and capable of modifying the properties of matter in a purely physical manner, wherein a wavefunction of the present invention is controlled to provide different energies, thereby providing assistance to environmental improvement techniques, agricultural cultivation and planting techniques, and traditional medical techniques.

The method for performing quantum control on infinitesimal quanta includes an independent reaction space provision step, an infinitesimal-quantum kinetic energy enhancement step, and a parameter control step.

In the independent reaction space provision step, at least one cubic closed space is provided. Each closed space defines therein a range of action, i.e., (x, y, z) of a wavefunction, for particles and waves of infinitesimal quanta, so as to obtain balanced reaction conditions.

In the infinitesimal-quantum kinetic energy enhancement step, reaction elements of different geometric shapes are provided on at least one of the six inner surfaces of each cubic closed space. Each reaction element is provided with at least two slits and a plurality of pores. More particularly, each reaction element includes two mesh plates which are overlapped to form tiny lattices (i.e., slit structures), and the reaction elements are arranged as an asymmetric array. While particles and waves in each closed space pass through these tiny lattices, potential differences are created, and free waves in each closed space are adjusted so as to produce interference and superposition effects, thereby generating wave beams as a basis of infinitesimal-quantum reaction.

In the parameter control step, control is carried out with the time unit of "second", i.e., (t) in the wavefunction, and a first reaction parameter. Upon each occurrence of the first reaction parameter, wave control is performed on a corresponding one of the at least one closed space provided in the independent reaction space provision step. Furthermore, a metal plate having an irregular surface is sandwiched between the two mesh plates of each reaction element so as to enable reflection of low-energy waves and particles through space. Thus, the low-energy waves and particles act repeatedly in each reaction element until their energy levels (frequencies) are raised through repeated interference and superposition to such extent that the low-energy waves and particles can penetrate the metal plate, thereby enhancing the kinetic energy of electromagnetic waves.

Moreover, the parameter control step further involves a second reaction parameter for performing time interval control between consecutive uses of a plurality of the independent reaction spaces, so as to achieve continuous equilibrium with electromagnetic waves in the atmosphere. Thus, the traditional thermodynamic principles are satisfied, and the results are stable. The smallest time unit for the time interval control is "second".

### BRIEF DESCRIPTION OF THE SEVERAL VIEWS OF THE DRAWINGS

The invention as well as a preferred mode of use, further objectives, and advantages thereof will be best understood by referring to the following detailed description of illustrative embodiments in conjunction with the accompanying drawings, in which:
FIG. 1 is a block flow diagram of a method for performing quantum control on infinitesimal quanta according to the present invention;
FIG. 2A and FIG. 2B are schematic views of a device for performing quantum control on infinitesimal quanta according to the present invention;
FIGS. 3A to 3G are perspective views of three-dimensional closed spaces according to the present invention, wherein the three-dimensional closed spaces are installed respectively with reaction elements of various configurations;
FIG. 4 illustrates an embodiment of the method for performing quantum control on infinitesimal quanta according to the present invention, wherein a plurality of independent reaction spaces are used consecutively; and
FIGS. 5A to 5D illustrate another embodiment of the method for performing quantum control on infinitesimal quanta according to the present invention, wherein the matter to be processed, i.e., mineral water, is treated successively by four three-dimensional closed spaces with different reaction elements.

### DETAILED DESCRIPTION OF THE INVENTION

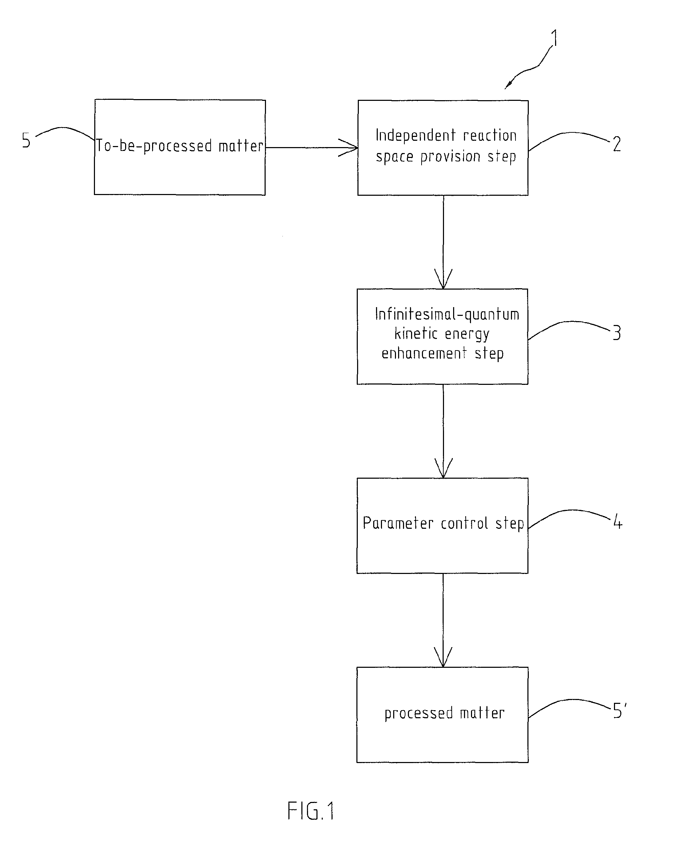

Referring to FIG. 1, a method 1 for performing quantum control on infinitesimal quanta includes an independent reaction space provision step 2, an infinitesimal-quantum kinetic energy enhancement step 3, and a parameter control step 4.

In the independent reaction space provision step 2, at least one three-dimensional closed space is provided, wherein each of the at least one closed space has a cubic shape. Each closed space defines therein a range of action for particles and waves of infinitesimal quanta, so as to obtain balanced reaction conditions.

In the infinitesimal-quantum kinetic energy enhancement step 3, at least one reaction element is provided on at least one inner surface of each of the at least one closed space, wherein in case a plurality of such reaction elements are provided, the reaction elements have different geometric shapes. Each reaction element is provided with at least two slits and a plurality of pores. While particles and waves in each closed space pass through these tiny lattices (slit structures), free waves in each closed space are adjusted so as to produce interference and superposition effects. Consequently, wave beams are generated as a basis of infinitesimal-quantum reaction.

In the parameter control step 4, wherein "second" is used as the time unit for control, a first reaction parameter and a second reaction parameter are provided. When the first reaction parameter occurs, wave control is performed on a corresponding one of the at least one closed space provided in the independent reaction space provision step 2. More specifically, a variation of equilibrium reaction between particles and waves in each of the at least one three-dimensional closed space is captured under the limitation of time. When the second reaction parameter occurs, given that a plurality of three-dimensional closed spaces are provided in the independent reaction space provision step 2, the time interval between the use of one closed space and the use of a next closed space is controlled, so as to enable continuous reaction with waves and particles in the atmosphere and thereby achieve balanced and stable reaction.

According to the foregoing steps, a to-be-processed matter 5 (e.g., mineral water) is placed in the at least one three-dimensional closed space provided in the independent reaction space provision step 2. Under the limitation of space and time, and by virtue of the lattices, or slit structures, formed in the asymmetrically arrayed at least one reaction element, interference and superposition take place as a result of potential differences. Consequently, diffused waves and particles are enhanced and become wave beams. Under the action of the wave beams and the control of the first reaction parameter provided in the parameter control step 4, the properties of the to-be-processed matter 5 are modified after processing, thus producing a processed matter 5'. More specifically, the nuclear magnetic resonance frequency and electric properties of the to-be-processed matter 5 (i.e., mineral water) are altered, the dimensions of water molecule clusters in the mineral water are standardized, and the percentage contents of trace elements in the mineral water are changed. In addition, as the original mineral water molecules have been processed by externally applied electromagnetic waves, the energy level and the intensity of orbital electron cloud of the mineral water molecules are both changed. The aforesaid phenomena prove that infinitesimal quanta have been effectively controlled. (Note: By varying the number of seconds specified by the first reaction parameter and the shapes of the reaction elements, the physical properties of the mineral water can be modified differently so as to produce different control effects.)

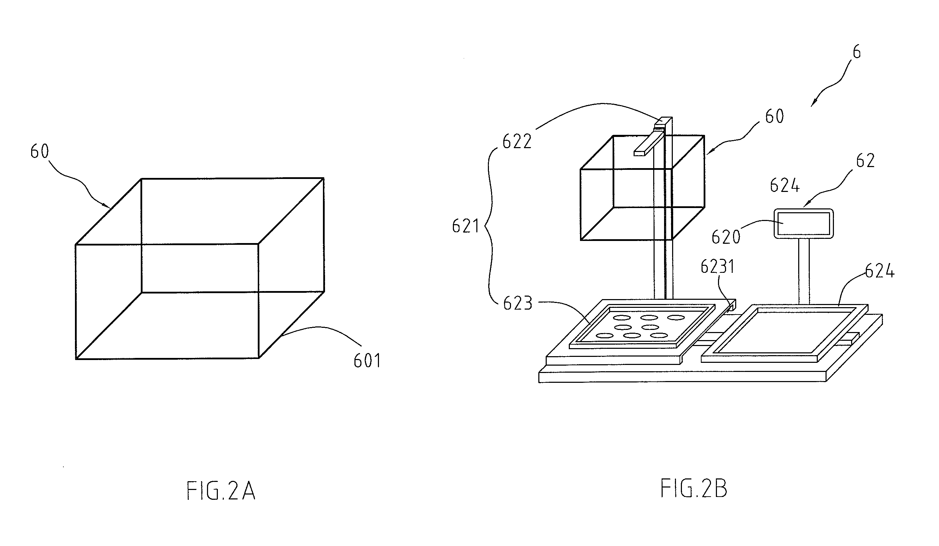

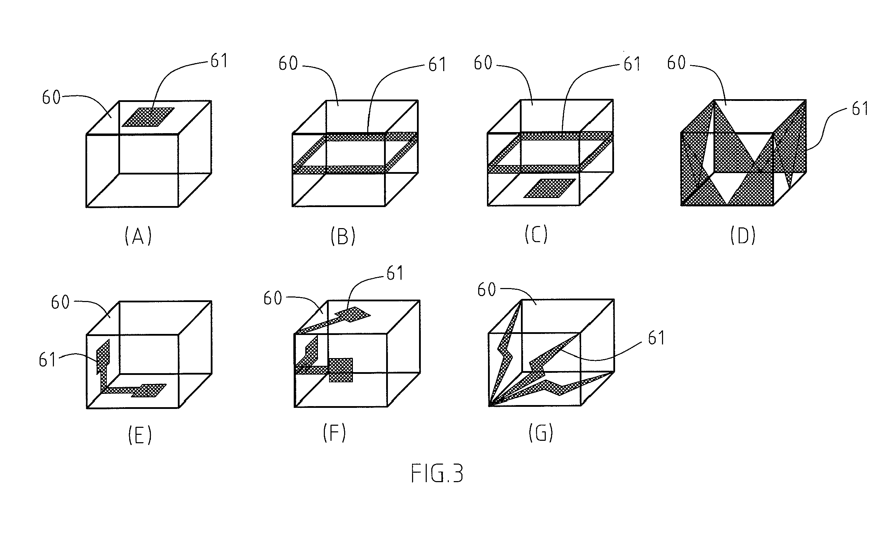

Please refer to FIGS. 2A, 2B and FIGS. 3A to 3G for a device using the foregoing method of the present invention. As shown in the drawings, a device 6 for performing quantum control on infinitesimal quanta according to the present invention includes a three-dimensional closed space 60, a plurality of reaction elements 61, and a man-machine interface control mechanism 62. As shown in FIG. 2A, the three-dimensional closed space 60 has a cubic shape and is made of a transparent material and is formed with an inlet 601 through which a to-be-processed matter can be put into the closed space 60. The closed space 60 defines therein a range of action for particles and waves of infinitesimal quanta, i.e., (x, y, z) of a wavefunction, whereby balanced reaction conditions are obtained. As shown in FIGS. 3A through 3G, the plural reaction elements 61 have different shapes and are provided on at least one inner surface of each of the three-dimensional closed spaces 60 and arranged as asymmetric arrays, thus causing particles and waves to move and exhibit potential differences. In addition, each of the plural reaction elements 61 includes a plurality of black mesh plates which are overlapped to form numerous complicated slits and pores capable of producing enhanced interference and superposition effects. As shown in FIGS. 3A to 3G, each reaction element 61 can have a dumbbell shape, a cross shape, a triangular shape, a rectangular shape, a square shape, a lightning shape, and so on. It is worth mentioning that metal plates (made of aluminum in the present embodiment) each having an irregular surface are sandwiched between the mesh plates of each reaction element 61 to enable reflection of low-energy waves and particles in space. Thus, the low-energy waves and particles act repeatedly in each reaction element 61 until their energy levels (frequencies) are increased through repeated interference and superposition to such extent that the originally low-energy waves and particles are now able to penetrate the metal plates. As a result, the kinetic energies of the waves and particles are enhanced. In practice, the metal plates sandwiched between the mesh plates are arranged equidistantly or in an arithmetic or geometric progression.

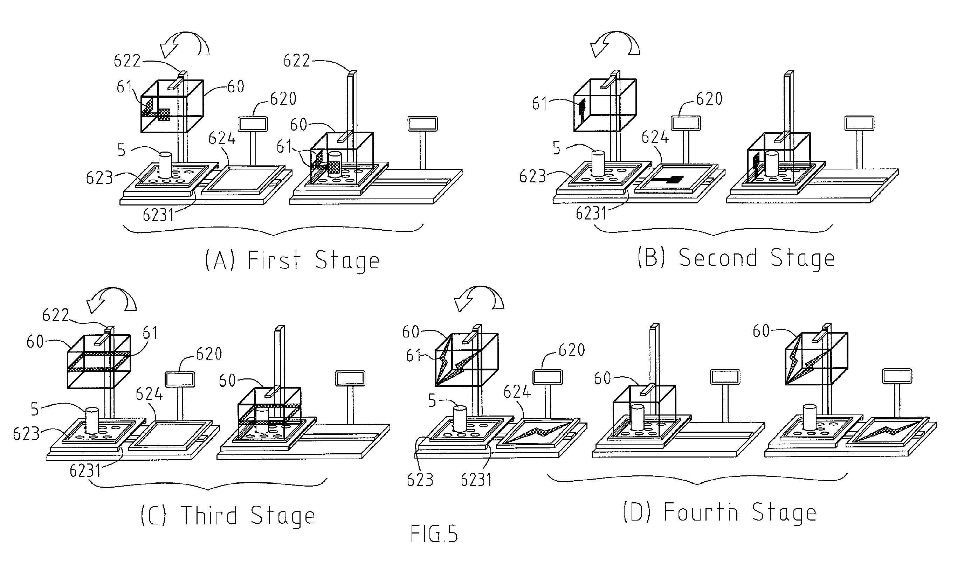

Referring back to FIG. 2B, the man-machine interface control mechanism 62 includes a man-machine interface control unit 620 and an automatic catch and transport unit 621. The man-machine interface control unit 620 includes a control circuit and a starting switch (not shown). The control circuit is preset with necessary parameters, which include a reaction time and a time interval for controlling a connecting reaction between two three-dimensional closed spaces 60. The starting switch is configured for turning on and off a power source. The automatic catch and transport unit 621, which is connected to and controlled by the man-machine interface control unit 620, includes a pneumatic lift bar 622 and a transport mechanism. The transport mechanism includes a first transport tray 623 and a second transport tray 624 to be nested in the first transport tray 623. The pneumatic lift bar 622 is connected with the three-dimensional closed space 60. The first and second transport trays 623, 624 operate by a transmission member (not labeled) and in conjunction with the pneumatic lift bar 622 to transport the to-be-processed matter along a predetermined direction. More specifically, while the pneumatic lift bar 622 is lowered such that the three-dimensional closed space 60 covers the first transport tray 623, the second transport tray 624 is slid synchronously into a receiving groove 6231 (shown in FIG. 5) of the first transport tray 623. When reaction is completed, the pneumatic lift bar 622 is lifted such that the three-dimensional closed space 60 leaves the first transport tray 623, the to-be-processed matter is transported to the next processing step.

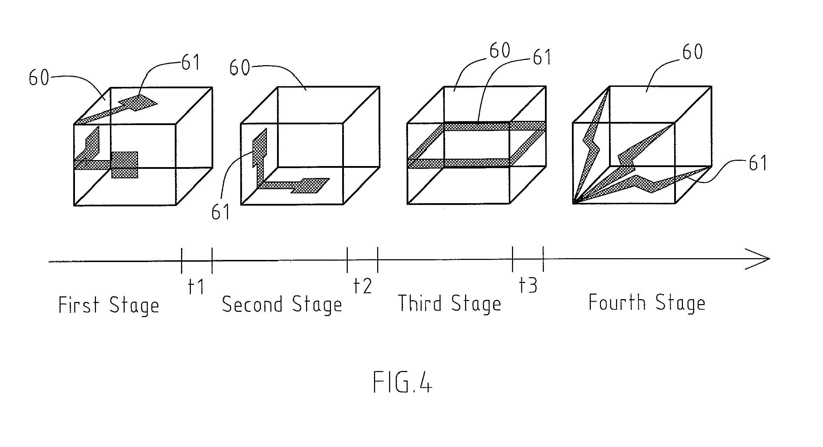

FIG. 4 illustrates the parameter control step 4 of the method of the present invention, showing time interval control between consecutive uses of several independent three-dimensional closed spaces 60. FIG. 4 depicts a four-stage processing process, wherein each stage involves a first reaction parameter and a second reaction parameter, and the control is carried out with "second" being the time unit. When the first reaction parameter occurs, wave control is performed on a corresponding one of the plural three-dimensional closed spaces 60 provided in the independent reaction space provision step 2. More specifically, by means of the differently shaped reaction elements 61 (such as those shown in FIGS. 3A to 3G with the rectangular shape, the lightning shape, and so on), a variation of equilibrium reaction between particles and waves in each of the three-dimensional closed spaces 60 is captured under the limitation of time. When the second reaction parameter occurs, the time intervals (t1, t2, t3) between the uses of the plural three-dimensional closed spaces 60 provided in the independent reaction space provision step 2 are controlled, so as to enable continuous reaction with waves and particles in the atmosphere and thereby achieve a balanced and stable reaction.

Please refer again to FIG. 4 in combination with FIG. 5 for an illustration of how a to-be-processed matter 5 (e.g., mineral water) undergoes a four-stage processing process by the device for performing quantum control on infinitesimal quanta according to the present invention. To begin with, the starting switch of the man-machine interface control unit 620 is turned on so as for the pneumatic lift bar 622 to lift open a first three-dimensional closed space 60. After the to-be-processed matter 5 is put in place, the first three-dimensional closed space 60 is lowered by the pneumatic lift bar 622 so as to cover the to-be-processed matter 5. Meanwhile, the second transport tray 624 is slid synchronously into the receiving groove 6231 of the first transport tray 623 (first stage; FIG. 5A). During a preset reaction time (i.e., the first reaction parameter), particles and waves in the first three-dimensional closed space 60 pass through the slits of the plural reaction elements 61, and free waves in the space are thus adjusted to produce interference and superposition effects. Then, the first three-dimensional closed space 60 is lifted opened and stays open for a preset time interval (i.e., the second reaction parameter) so as to reach equilibrium with electromagnetic waves in the atmosphere. Following the same procedure, the to-be-processed matter 5 enters second and third three-dimensional closed spaces 60 (second and third stages; FIGS. 5B, 5C) and a fourth three-dimensional closed space 60 (fourth stage; FIG. 5D) for further processing. With different reaction times (i.e., the first reaction parameters) and different time intervals (i.e., the second reaction parameters (t1, t2, t3) shown in FIG. 4), the physical properties of the to-be-processed matter 5 are modified. According to the law of conservation of energy, assimilation of matter cannot be attained without provision of basic kinetic energy. Therefore, in the method for performing quantum control on infinitesimal quanta according to the present invention, the acquisition of kinetic energy is realized in the following manner. Based on the concept of wavefunction control in quantum mechanics, three-dimensional multi-layer double-slit structures are designed in the present invention to adjust free waves in space. Then, through proper combination of reaction spaces and time parameters, photoelectromagnetic chain reactions take place to provide the resonance frequency required for assimilation, thereby modifying the physical properties of a matter to be processed.

Hence, the method for performing quantum control on infinitesimal quanta according to the present invention is capable of affecting molecular bonds and element properties of matter for different purposes and thereby controlling the wavefunction to provide different energies. Apart from the above-given example of mineral water, the present invention is also applicable to providing assistance to environmental improvement techniques, agricultural cultivation and planting techniques, traditional medical techniques, and so forth. Take the rusting of iron for instance. When water molecules come into contact with iron, hydrogen atoms in the water molecules are ionized such that the oxygen atoms bond with iron to form iron oxide. If a resonance wave capable of inhibiting the activity of oxygen or iron atoms is provided, oxidation will be slowed down to produce an anti-rust effect. As another instance, the present invention can also decompose harmful compound molecules into non-toxic substances through wave resonance, thus removing pollutants such as dioxin and ammonia, nitrogen, and surfactant in water. Furthermore, the physical properties of a water body can be modified (e.g., molecule clusters can be standardized, resonance frequency enhanced, polarity altered, electric properties varied, proportion of trace elements adjusted, and dissolution rate changed) by varying the combination of different parameters according to the item(s) to be modified. Thus, fungi and algae in the water body can be effectively vitalized to accelerate the metabolic cycle, and increase the self-purification capacity, of the water body. Consequently, by means of the original metabolic cycle, dissolved oxygen can be increased, ammonia and nitrogen reduced, bad odor eliminated, cloudiness lowered, and chemical pollution abated, wherein the related items include but are not limited to pH, acidity, alkalinity, chloride, suspended solid (SS), dissolved solid (DS), chemical oxygen demand (COD), biochemical oxygen demand (BOD), nitrogen, phosphorus, sulfur compounds, heavy metals, radioactive substances, detergents, and other pollutants. As a result, with the improvement of water quality, rivers are vivified, and their biotic indices raised, thereby restoring the natural state of rivers, i.e., a state in which fish and shrimps can be found. Besides, the present invention is equally suitable for use in the medical field as well as agricultural cultivation, livestock raising, and aquaculture. In these cases, wave control and the principle of resonance can be applied according to the desired influences and actions, in conjunction with control programs of different functions, so as to achieve assimilation and regulation effects.

As described above, the method and device for performing quantum control on infinitesimal quanta according to the present invention achieve the intended objectives and meet the requirements for patent application. However, it is understood that the foregoing description is only illustrative of the preferred embodiments and is not to limit the scope of the present invention. All equivalent changes or modifications which are based on the contents disclosed herein and do not depart from the spirit of the present invention should be encompassed by the appended claims.

## Claims

1. A method for performing quantum control on infinitesimal quanta, wherein quantum control is performed on infinitesimal quanta so as to modify properties of a to-be-processed matter, the method comprising:
an independent reaction space provision step comprising: providing at least a three-dimensional closed space, wherein each said closed space defines therein a range of action for particles and waves of infinitesimal quanta so as to obtain balanced reaction conditions;
an infinitesimal-quantum kinetic energy enhancement step, comprising: providing reaction elements of different geometric shapes on at least one of adjacent inner surfaces of each said closed space, wherein each said reaction element is provided with at least two slits and a plurality of pores such that, while particles and waves in the each said closed space pass through the at least two slits, free waves in the each said closed space are adjusted so as to produce interference and superposition effects, thereby creating wave beams as a basis of infinitesimal-quantum reaction; and
a parameter control step comprising: providing a first reaction parameter and, upon each occurrence thereof, performing wave control on a corresponding said closed space provided in the independent reaction space provision step, wherein the wave control uses "second" as a time unit.

2. The method of Claim 1, wherein each said reaction element comprises a plurality of mesh plates overlapped to form numerous said slits and numerous said pores which are configured in a complicated manner and capable of producing enhanced interference and superposition effects.

3. The method of Claim 2, wherein metal plates each having an irregular surface are sandwiched between the mesh plates of each said reaction element, such that low-energy waves and particles are reflected in each said closed space and act repeatedly in the reaction elements until energy levels (frequencies) of the low-energy waves and particles are increased through repeated interference and superposition to such extent that the originally low-energy waves and particles can now penetrate the metal plates, thereby enhancing kinetic energy of the low-energy waves and particles.

4. The method of Claim 3, wherein the metal plates are sandwiched between corresponding said mesh plates equidistantly or in an arithmetic or geometric progression.

5. The method of Claim 4, wherein the parameter control step further comprises: providing a second reaction parameter and performing accordingly time interval control between consecutive uses of a plurality of said closed spaces, so as to achieve continuous equilibrium with electromagnetic waves in atmosphere and satisfy traditional thermodynamic principles, thereby obtaining stable reaction results, wherein the time interval control uses "second" as a smallest time unit.

6. The method of Claim 5, wherein the first reaction parameter varies with the to-be-processed matter as well as the mesh plates and metal plates provided in the infinitesimal-quantum kinetic energy enhancement step.

7. The method of Claim 6, wherein each said three-dimensional closed space has a cubic shape.

8. The method of Claim 7, wherein the metal plates are made of aluminum.

9. The method of Claim 8, wherein the mesh plates are black.

10. The method of Claim 7, wherein the reaction elements on the at least one of adjacent inner surfaces of each said three-dimensional closed space are arranged as an asymmetric array, thus causing particles and waves to move and exhibit potential differences.

11. A device for performing quantum control on infinitesimal quanta, wherein quantum control is performed on infinitesimal quanta so as to modify properties of a to-be-processed matter, the device comprising:
at least a three-dimensional closed space formed with an inlet such that the to-be-processed matter is placed into each said three-dimensional closed space through a corresponding said inlet;
at least a reaction element provided on an inner surface of each said three-dimensional closed space, wherein each said reaction element is provided with at least two slits and a plurality of pores; and
a control mechanism comprising:
a man-machine interface control unit comprising a starting switch and a control circuit controlling a reaction time; and
an automatic catch and transport unit connected to and controlled by the man-machine interface control unit and comprising:
a pneumatic lift bar connected with the at least a three-dimensional closed space for moving the at least a three-dimensional closed space; and
a transport mechanism operating in conjunction with the pneumatic lift bar so as to transport the to-be-processed matter along a predetermined direction.

12. The device of Claim 11, wherein each said three-dimensional closed space has a cubic shape and is made of a transparent material.

13. The device of Claim 12, wherein each said reaction element comprises a plurality of overlapped mesh plates and has a geometric shape selected from the group consisting of a dumbbell shape, a cross, a triangle, a rectangle, a square, a trapezoid, and a lightning shape.

14. The device of Claim 13, wherein metal plates each having an irregular surface are sandwiched between the mesh plates of each said reaction element.

15. The device of Claim 14, wherein the metal plates are made of aluminum.

16. The device of Claim 15, wherein the control circuit further comprises a time interval for controlling a connecting reaction between two said three-dimensional closed spaces.

17. The device of Claim 11, wherein the transport mechanism of the automatic catch and transport unit comprises a first transport tray and a second transport tray to be nested in each other immediately by a transmission member and operating in conjunction with the pneumatic lift bar such that the at least a three-dimensional closed space is moved onto the first transport tray so as to proceed to quantum control on the to-be-processed matter.
